(19) Europäisches Patentamt
European Patent Office
Office européen des brevets

(11) EP 0 843 688 B1

(12) **EUROPÄISCHE PATENTSCHRIFT**

(45) Veröffentlichungstag und Bekanntmachung des Hinweises auf die Patenterteilung:
**23.06.1999 Patentblatt 1999/25**

(21) Anmeldenummer: **96929205.1**

(22) Anmeldetag: **05.08.1996**

(51) Int Cl.[6]: **C08F 10/10**

(86) Internationale Anmeldenummer:
**PCT/EP96/03441**

(87) Internationale Veröffentlichungsnummer:
**WO 97/06189 (20.02.1997 Gazette 1997/09)**

(54) **VERFAHREN ZUR HERSTELLUNG VON HALOGENFREIEM, REAKTIVEM POLYISOBUTEN**
METHOD OF PRODUCING REACTIVE HALOGEN-FREE POLYISOBUTENE
PROCEDE DE PREPARATION DE POLYISOBUTENE REACTIF EXEMPT D'HALOGENES

(84) Benannte Vertragsstaaten:
**BE DE ES FI FR GB IT NL SE**

(30) Priorität: **07.08.1995 DE 19528942**

(43) Veröffentlichungstag der Anmeldung:
**27.05.1998 Patentblatt 1998/22**

(73) Patentinhaber: **BASF AKTIENGESELLSCHAFT
67056 Ludwigshafen (DE)**

(72) Erfinder:
- **SIGWART, Christoph
D-69198 Schriesheim (DE)**
- **GEHRER, Eugen
D-67069 Ludwigshafen (DE)**
- **MÜLLER, Ulrich
D-67434 Neustadt (DE)**
- **RATH, Hans, Peter
D-67269 Grünstadt (DE)**
- **FISCHER, Rolf
D-69121 Heidelberg (DE)**

(56) Entgegenhaltungen:
**EP-A- 0 628 575 US-A- 4 918 041**

- **J.Chem.Soc.,Chem.Commun, 1992, C.-Y. Hsu et al: "A Highly Active Solid Superacid Catalyst for n-Butane Isomerization: a Sulfated Oxide Containing Iron, Manganese and Zirconium", page 1645, Das ganze Dokument**
- **Dialog Information Services, File 351, Dialog accession no. 003231210, WPI accession no. 81-91769D/50, Nippon Oils & Fats KK: "Low mol. wt. isobutylenel polymer prepn. from isobutylene using, as catalyst, calcined product of zirconium oxide and molybdenum oxide", JP,A,56139429, 811030, 8150 (Basic), Zusammenfasung**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 843 688 B1

Printed by Jouve, 75001 PARIS (FR)

**Beschreibung**

Die vorliegende Erfindung betrifft ein Verfahren zur Herstellung von halogenfreiem, reaktivem Polyisobuten mit einem Gehalt an endständigen Doppelbindungen von mehr als 50 mol-% und einem mittleren Molekulargewicht $M_n$ von 500 bis 5000 Dalton durch die kationische Polymerisation von Isobuten oder Isobuten-haltigen Kohlenwasserstoffgemischen in flüssiger Phase.

Bei der Isobuten-Polymerisation bildet sich ein untrennbares Gemisch aus Polyisobutenen mit unterschiedlicher Position der Doppelbindung in den einzelnen Polyisobutenen. Polyisobutene der Formel I

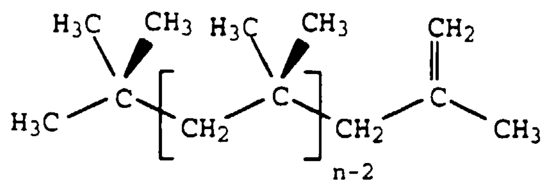

I,

in der n den Polymerisationsgrad angibt, der sich wiederum aus dem mittleren Molekulargewicht $M_n$ des hergestellten Polyisobutens ergibt, enthalten endständige C-C-Doppelbindungen vom Vinyliden-typ, die in dieser Anmeldung aufgrund ihrer Stellung im Polyisobutenmolekül auch als α-olefinische Doppelbindungen bezeichnet werden. Dementsprechend werden die Doppelbindungen in Polyisobutenen der Formel II

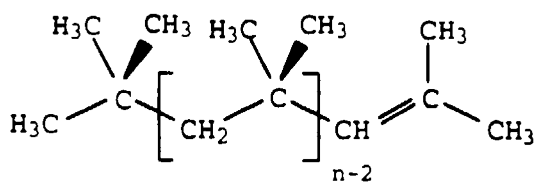

II

als β-olefinisch bezeichnet. werden bei der Polymerisation von Isobuten keine besonderen Maßnahmen ergriffen, so entsteht ein statistisches Gemisch aus Polyisobutenen mit α-olefinischen, also endständigen, β-olefinischen und weiter im Inneren des Polyisobutenmoleküls gelegenen Doppelbindungen. Der Gehalt eines nach einem bestimmten Herstellverfahren hergestellten Polyisobuten-Produkts an endständigen Doppelbindungen als auch der Gehalt an β-olefinischen Doppelbindungen wird in mol-% angegeben.

Polyisobutene mit Molekulargewichten von bis zu 100000 Dalton sind bekannt. Die Herstellung dieser Olefine, die beispielsweise in H. Güterbock, Polyisobutylene und Mischpolymerisate, S. 77-104, Springer Verlag, Berlin, 1959, beschrieben ist, erfolgt üblicherweise durch Lewissäure-katalysierte Isobuten-Polymerisation, wobei als Lewis-Säuren Aluminiumchlorid, Alkylaluminiumchlorid oder Bortrifluorid eingesetzt werden. Die hierbei erhaltenen Polymere weisen jedoch mit weniger als 10 mol-% einen relativ geringen Gehalt an endständigen C-C-Doppelbindungen vom Vinyliden-Typ auf.

Dagegen besitzt reaktives Polyisobuten (PIB) mit Molekulargewichten von üblicherweise 500 bis 5000 Dalton einen hohen Gehalt an endständigen Vinylidengruppen, bevorzugt von mehr als 50 mol-%. Diese reaktiven Polyisobutene werden als Zwischenprodukte zur Herstellung von Schmiermittel- und Kraftstoff-Additiven, wie sie beispielsweise in DE-A 27 02 604 beschrieben sind, verwendet. Zur Herstellung dieser Additive wird Polyisobuten zunächst mit Maleinsäureanhydrid umgesetzt. Dabei reagieren bevorzugt die endständigen Doppelbindungen vom Vinyliden-Typ, wohingegen Doppelbindungen, die sich weiter im Inneren des Makromoleküls befinden, je nach Stellung im Molekül in geringerem Maße oder gar nicht reagieren. Die gebildeten Polyisobuten-Maleinsäureanhydrid-Addukte werden anschließend durch Reaktion mit bestimmten Aminen in die entsprechenden Additive überführt. Ein hoher Anteil an endständigen Doppelbindungen ist daher für Polyisobutene, die als Ausgangsstoffe für die oben genannten Additive eingesetzt werden, unbedingt erforderlich. Ähnliches gilt für die Herstellung der ebenfalls als Kraftstoffadditive verwendeten Polyisobutenamine gemäß EP-A 244 616, die durch Hydroformylierung des reaktiven Polyisobutens und anschließende reduktive Aminierung des dabei erhaltenen Polyisobutenaldehyds erzeugt werden. Hierbei wird ebenfalls Polyisobuten mit einem hohen Gehalt an endständigen Doppelbindungen bevorzugt eingesetzt, doch werden bei der Hydroformylierung mit Kobaltkatlaysatoren, aufgrund von deren Doppelbindungsisomerisierungsaktivität, auch β-olefinische Polyisobutene zum gewünschten Produkt hydroformyliert.

Die Herstellung von reaktivem Polyisobuten durch die homogenkatalytische Polymerisation von Isobuten ist bereits bekannt. Beispielsweise wird gemäß DE-A 27 02 604 durch Umsetzung von Isobuten in Gegenwart von Bortrifluorid ein Polyisobuten-Produkt erhalten, welches einen Gehalt an endständigen Doppelbindungen von bis zu 88 % aufweist. EP-A 145 235 lehrt die Polymerisation von Isobuten in Gegenwart eines Komplexes aus Bortrifluorid und einem primären Alkohol in einem Temperaturbereich von -100°C bis +50°C, wobei Produkte mit ähnlich hohen Vinylidendoppelbindungs-Gehalten erhalten werden. Mit Komplexen aus Bortrifluorid und sekundären Alkoholen als Katalysator kann nach US-A 5 286 823 ebenfalls hochreaktives Polyisobuten hergestellt werden.

Nachteilig an diesen homogen katalysierten Verfahren ist, daß die verwendeten Lewis-Säure-Katalysatoren korrosiv sind und die Gefahr besteht, daß neben dem gewünschten, reaktiven Polyisobuten halogenierte, polymere Nebenprodukte entstehen, die praktisch nicht vom PIB abtrennbar sind und sich nachteilig auf die Produkt- und Weiterverarbeitungseigenschaften des PIB auswirken. Die Abtrennung des Homogenkatalysators erfolgt bei diesen Verfahren üblicherweise durch Quenchung mit einem Nucleophil, wodurch der Katalysator zerstört wird, und anschließende extraktive Abtrennung des PIB aus der Quenchmischung. Diese zusätzlichen Aufarbeitungsschritte stellen einen weiteren Nachteil des homogen katalysierten Verfahrens zur Herstellung von PIB dar.

Die Herstellung von PIB mit Hilfe heterogener Katalysatoren ist ebenfalls bekannt. US-A 4 288 649 beschreibt Verfahren zur Herstellung von Polyisobuten eines mittleren Molekulargewichts von > 1250 Dalton durch die Polymerisation von Isobuten-haltigen $C_4$-Kohlenwasserstoffgemischen an halogenierten Aluminiumoxid-Katalysatoren. Diese Katalysatoren werden durch die Behandlung des Aluminiumoxids mit einem Halogenierungsmittel, vorzugsweise mit einem Chlorierungsmittel, insbesondere mit Tetrachlorkohlenstoff, bei erhöhter Temperatur hergestellt. Dieses Verfahren hat den Nachteil, daß ein Teil des Chlors vom Katalysator auf das sich bildende Polymer übertragen wird. Beispielsweise führt die Polymerisation einer Mischung von n-Butan, Isobutan und Isobuten an einem solchermaßen hergestellten, chlorierten Aluminiumoxid-Katalysator nach 2 Stunden Reaktionszeit zu einem Polyisobuten-Produkt mit einem Chlorgehalt von 46 ppm.

US-A 5 326 920 betrifft ein Verfahren zur Isobuten-Polymerisation, in dem ein oxidisches Trägermaterial, vorzugsweise Siliciumdioxid, das mit einem daran gebundenen Metallchlorid, vorzugsweise einem Aluminiumchlorid, aktiviert worden ist, als Heterogenkatalysator verwendet wird. Besonders bevorzugt wird nach dieser Schrift ein $SiO_2$-$AlCl_2$-Katalysator verwendet, in dem $AlCl_2$-Gruppen über Sauerstoffbrücken am $SiO_2$-Träger verankert sind. Nachteilig an diesem Verfahren ist, daß die erhaltenen Polyisobuten-Produkte eine extrem breite Molekulargewichtsverteilung D von 8 bis 14 haben, ihr Gehalt an endständigen Doppelbindungen gering ist und ihr Chlorgehalt im ppm-Bereich liegt. Außerdem ist bei diesem Verfahren die Anwesenheit von Promotoren, wie Wasser, Alkoholen, Alkylhalogeniden oder Chlorwasserstoff, erforderlich, damit eine für den technischen Betrieb hinreichende Katalysatoraktivität erzielt wird.

Nach JP-A 139 429/1981 werden Zirkoniumdioxid- und Molybdänoxidhaltige Heterogenkatalysatoren zur Herstellung von Isobutenoligomeren eines Molekulargewichts von weniger als 300 Dalton eingesetzt. Zur Erhöhung ihrer Aktivität kann diesen Katalysatoren noch Aluminiumfluorid zugemischt werden. Beispielsweise wird gemäß dieser Schrift bei der Umsetzung eines Isobutenhaltigen $C_4$-Schnitts (Zusammensetzung: 46 % Isobuten, 28 % 1-Buten, 8 % 2-Butene, 12 % n-Butan, 5 % Isobutan, 1 % 1,3-Butadien) bei 120°C an einem $MoO_3$-$ZrO_2$-Katalysator, eines Molybdängehalts von 13 Gew.-%, berechnet als $MoO_3$, eine Mischung aus Isobutenoligomeren erhalten, die zu 29 %, 49 % bzw. 19 % aus Di-, Tri- bzw. Tetraisobuten besteht.

Der vorliegenden Erfindung lag deshalb die Aufgabe zugrunde, ein Verfahren zur Herstellung halogenfreien, reaktiven Polyisobutens mit einem Gehalt an endständigen Doppelbindungen von mehr als 50 mol-%, einem Gehalt an endständigen und β-olefinischen Doppelbindungen von mehr als 80 mol-% und einem mittleren Molekulargewicht von 500 bis 5000 Dalton mit Hilfe eines Heterogenkatalysators zu finden. Das nach diesem Verfahren hergestellte PIB sollte eine enge Molekulargewichtsverteilung D von weniger als 4 haben. Ferner sollten zur Durchführung dieses Verfahrens geeignete Heterogenkatalysatoren gefunden werden, mit denen das Verfahren zur Polyisobutenherstellung wirtschaftlich betrieben werden kann.

Dementsprechend wurde ein Verfahren zur Herstellung von halogenfreiem, reaktivem Polyisobuten mit einem Gehalt an endständigen Doppelbindungen von mehr als 50 mol-% und einem mittleren Molekulargewicht $M_n$ von 500 bis 5000 Dalton durch die kationische Polymerisation von Isobuten oder Isobuten-haltigen Kohlenwasserstoffgemischen in flüssiger Phase gefunden, das dadurch gekennzeichnet ist, daß man die Polymerisation bei einer Temperatur von -30°C bis +40°C an einem heterogenen, calcinierten Polymerisationskatalysator durchführt, der mindestens ein als Promotor wirksames Element, ausgewählt aus der I., II., III., IV., V., VII. oder VIII. Nebengruppe des Periodensystems der Elemente oder aus der II., III., IV., V. oder VI. Hauptgruppe des Periodensystems der Elemente oder mehrere dieser Elemente jeweils in Form einer sauerstoffhaltigen Verbindung und Zirkonium in Form einer sauerstoffhaltigen Verbindung enthält und wobei der Polymerisationskatalysator keine technisch wirksamen Mengen an Halogen enthält.

Im Unterschied zu reinem Zirkoniumdioxid, das als Katalysator für die Polymerisation von Isobuten praktisch inaktiv ist oder nur eine sehr geringe katalytische Aktivität hat, haben die erfindungsgemäß anzuwendenden Katalysatoren eine gute bis sehr gute Aktivität und Selektivität für die Polymerisation von Isobuten zu reaktivem, niedermolekularem Polyisobuten mit einem Gehalt an endständigen Doppelbindungen von mehr als 50 mol-% und einem mittleren Molekulargewicht von 500 bis 5000 Dalton sowie einer relativ engen Molekulargewichtsverteilung D von weniger als 4. Da den erfindungsgemaß anzuwendenden Katalysatoren zur Erzielung einer hohen Aktivität und Selektivität

keine halogenierten Verbindungen zugesetzt werden müssen, ermöglichen sie die wirtschaftliche Herstellung von halogenfreiem PIB.

Wie später näher erläutert wird, besteht aufgrund der Herstellungsweise der erfindungsgemäß anzuwendenden Katalysatoren die Vermutung, daß der überwiegende Teil der in diesen Katalysatoren enthaltenen sauerstoffhaltigen Zirkoniumverbindungen als Zirkoniumdioxid vorliegt, weshalb zur Vereinfachung und Veranschaulichung im Folgenden von Zirkoniumdioxid-Katalysatoren, dotiertem Zirkoniumdioxid, Zirkoniumdioxid-Trägermaterial usw. gesprochen wird.

Im erfindungsgemäßen Verfahren werden Zirkoniumdioxid ($ZrO_2$)-Katalysatoren eingesetzt, die mindestens ein als Promotor wirksames Element, ausgewählt aus der I., II., III., IV., V., VII. oder VIII. Nebengruppe des Periodensystems der Elemente oder aus der II., III., IV., V. oder VI. Hauptgruppe des Periodensystems der Elemente, oder mehrere dieser Elemente in Form einer sauerstoffhaltigen Verbindung an das Zirkoniumdioxid fixiert enthalten.

Als "als Promotor wirksame Elemente" werden im Sinne der vorliegenden Erfindung solche Elemente bezeichnet, deren sauerstoffhaltige Verbindungen alleine oder in Kombination mit sauerstoffhaltigen Verbindungen anderer Elemente, in Verbindung und im Zusammenwirken mit dem Zirkoniumdioxid im fertigen Katalysator gegenüber undotiertem Zirkoniumdioxid eine um ein Vielfaches höhere katalytische Aktivität der derart dotierten Zirkoniumdioxid-haltigen Katalysatoren bei der Polymerisation von Isobuten zu halogenfreiem, reaktivem Polyisobuten eines mittleren Molekulargewichts von 500 bis 5000 Dalton bewirken. Somit sind die Halogene nicht als Promotor wirksame Elemente im Sinne der vorliegenden Erfindung anzusehen.

Bevorzugte Promotor-wirksame Elemente der I. Nebengruppe des Periodensystems sind Kupfer und Silber. Das bevorzugte als Promotor wirksame Element aus der II. Nebengruppe des Periodensystems ist Zink. Aus der III. Nebengruppe des Periodensystems, den sogenannten Seltenerdmetallen, werden aufgrund ihrer Verfügbarkeit Scandium, Yttrium, Lanthan, Cer, Neodym und Praseodym bevorzugt eingesetzt, obgleich die anderen Seltenerdmetalle erwartungsgemäß ähnlich gute Promotoreigenschaften wie die vorgenannten Seltenerdmetalle haben. Titan und Hafnium aus der IV. Nebengruppe des Periodensystems sind ebenfalls als Promotor wirksam, aufgrund seines niedrigeren Preises wird Titan bevorzugt vor Hafnium verwendet. Vanadium, Niob und Tantal aus der V. Nebengruppe des Periodensystems haben verglichen miteinander, ähnlich gute Promotoreigenschaften. Aus der VII. Nebengruppe des Periodensystems können Mangan und Rhenium vorteilhaft als Promotorelemente eingesetzt werden, wobei das Mangan in der Regel bessere Promotoreigenschaften als das Rhenium hat. Aus der VIII. Nebengruppe werden bevorzugt das Eisen, das Kobalt und das Nickel als Promotorelemente verwendet. Zwar sind auch die Platinmetalle Ruthenium, Rhodium, Palladium, Osmium, Iridium und Platin als Promotorelemente gut geeignet, aufgrund ihres hohen Preises werden sie allerdings verglichen mit den übrigen Elementen aus der VIII. Nebengruppe weniger bevorzugt eingesetzt.

Von den Elementen der II. Hauptgruppe des Periodensystems können Beryllium, Magnesium, Calcium, Strontium und Barium als Promotorelemente Verwendung finden, bevorzugt werden Calcium und Magnesium hierfür eingesetzt. Aus der III. Hauptgruppe des Periodensystems sind das Bor, Aluminium, Gallium und Indium, insbesondere das Bor, Aluminium und Gallium, bevorzugte Promotor-wirksame Elemente, während diesbezüglich aus der IV. Hauptgruppe des Periodensystems das Silicium, Germanium, Zinn und Blei, insbesondere das Silicium und das Zinn, zu nennen sind. Phosphor aus der V. und Schwefel aus der VI. Hauptgruppe des Periodensystems haben sich im erfindungsgemäßen Verfahren sehr gut als Promotorelemente bewährt, doch können auch das Arsen, Antimon, Wismut, Selen und Tellur als Promotorelemente eingesetzt werden.

Von den obengenannten, als Promotoren wirksamen Elementen sind außer Schwefel und Phosphor das Mangan, Eisen, Kobalt, Nickel, Zink, Zinn, Aluminium, Silicium, Calcium und Magnesium bevorzugt, wobei die Promotorelemente Mangan, Eisen, Kobalt und Aluminium besonders hervorzuheben sind.

Besonders vorteilhaft können $ZrO_2$-Katalysatoren im erfindungsgemäßen Verfahren angewandt werden, die mehrere der als Promotoren wirksame Elemente an das Zirkoniumdioxid gebunden enthalten. Bevorzugt werden beispielsweise solche Kombinationen von promotoraktiven Elementen verwendet, die außer Schwefel oder Phosphor noch eines oder mehrere Elemente aus den genannten Neben- und/oder Hauptgruppen des Periodensystems der Elemente enthalten, vorzugsweise aus der II., VII. und/oder VIII. Nebengruppe und/oder aus der II., III. und/oder VI. Hauptgruppe des Periodensystems der Elemente. Besonders bevorzugte Kombinationen von promotoraktiven Elementen sind z.B. Kombinationen des Schwefels und/oder Phosphors mit Eisen, Eisen/Mangan, Mangan oder Eisen/Aluminium.

Außer ihrer Elementarzusammensetzung ist die genaue chemische Struktur der erfindungsgemäß anzuwendenden Katalysatoren praktisch unbekannt. Möglicherweise bilden die als Promotoren-wirksamen Elemente mit dem Zirkoniumdioxid Mischoxide oder gemischtvalente Oxide, die katalytisch aktive Zentren ausbilden und so die Isobuten-Polymerisation katalysieren, möglicherweise sind die als Promotoren-wirksamen Elemente an die Oberflache des Zirkoniumdioxids durch chemische Bindungen, beispielsweise über Sauerstoffbrücken, wie in Rare Metals 11, 185 (1992) beschrieben, gebunden und bewirken auf diese Weise die katalytische Aktivität des dotierten Zirkoniumdioxids, das ohne eine solche Dotierung im erfindungsgemäßen Verfahren praktisch keine katalytische Aktivität entfaltet. Somit kann auch keine konkrete Aussage über die Wirkungsweise dieser Katalysatoren gemacht werden: Manche der erfindungsgemäß anwendbaren Katalysatoren erweisen sich bei der Bestimmung ihrer Acidität durch Hammett-Titration als starke Säuren, andere wiederum erweisen sich bei dieser Titrationsmethode als praktisch neutral und katalysieren dennoch die Isobuten-Polymerisation unter Ausbildung des gewünschten hohen Gehalts an endstandigen Doppelbindungen.

Im Hinblick auf die Art und Weise ihrer Herstellung besteht, wie erwähnt, Grund zu der Annahme, daß der größte Teil des Zirkoniums in den erfindungsgemaß anzuwendenden Katalysatoren als Zirkoniumdioxid vorliegt und die sauerstoffhaltigen Verbindungen der Promotorelemente, beispielsweise durch Mischoxidbildung mit dem Zirkoniumdioxid oder durch die erwähnte chemische Anbindung an die Zirkoniumdioxid-Oberflache an dieses fixiert sind. Demzufolge wird in dieser Anmeldung auch von an Zirkoniumdioxid fixierten, sauerstoffhaltigen Verbindungen der als Promotor wirksamen Elementen gesprochen. Da die chemische Struktur der erfindungsgemäß anzuwendenden Katalysatoren unbekannt ist, wird zum Zwecke der Charakterisierung der einzelnen Katalysatoren, deren Gehalt an Zirkonium und Promotorelementen in Gew.-%, berechnet als Zr, bzw. das betreffende Promotorelement, bezogen auf das Gesamtgewicht des calcinierten Katalysators angegeben. Der Rest zu 100 Gew.-% wird größtenteils vom an diese Elemente gebundenen Sauerstoff beigetragen, aber auch von herstellungsbedingt in den Katalysator gelangten, technisch unwirksamen Verunreinigungen, z.B. Alkalimetallverbindungen. Auch Wasserstoff kann in chemisch gebundener Form, z.B. in Form von OH-Gruppen oder in Form von selbst unter den Calcinierungsbedingungen nicht entfernbarem Kristallwasser, in den erfindungsgemäß anzuwendenden Katalysatoren nach deren Calcinierung vorliegen.

Im allgemeinen beträgt das Molverhältnis des Zirkoniums, berechnet als Zr, zu dem im Katalysator vorliegenden als Promotor wirksamen Element oder, kumulativ, zu den im Katalysator vorliegenden, als Promotor wirksamen Elementen, jeweils berechnet als das betreffende Element, Zr/Promotorelement, 50:50 bis 99,9:0,1, vorzugsweise 54:46 bis 99,7:0,3 und besonders bevorzugt 80:20 bis 98:2. Alkalimetalle, wenn, dann üblicherweise in Form sauerstoffhaltiger Alkalimetallverbindungen im Katalysator vorliegend, können herstellungsbedingt in Mengen von bis zu 1 Gew.-%, z.B. 0,1 bis 1 Gew.-%, im Katalysator vorhanden sein, jeweils berechnet als Alkalimetall. Die Alkalimetalle können z.B. durch die Verwendung alkalimetallhaltiger Fällungsmittel oder durch Alkalimetallverunreinigungen oder -bestandteile der zur Promotierung verwendeten Verbindungen der promotorwirksamen Elemente in den Katalysator eingeschleppt werden.

Die erfindungsgemaß anzuwendenden Polymerisationskatalysatoren sind im allgemeinen und bevorzugt halogenfrei. Je nach Art ihrer Herstellung, insbesondere abhängig vom Halogengehalt der zu ihrer Herstellung verwendeten Rohstoffe, können diese Katalysatoren jedoch mit durch diese Rohstoffe technisch unvermeidlich eingeschleppten, technisch jedoch unwirksamen Mengen an Halogen verunreinigt sein, die weder einen Promotoreffekt entfalten noch zur Bildung von halogeniertem Polyisobuten führen. Ursache für die technische Unwirksamkeit solcher unerwünschter Halogenverunreinigungen in den erfindungsgemäß anzuwendenden Katalysatoren ist, daß diese Verunreinigungen unspezifisch über den Katalysator verteilt sind und nicht Bestandteil der katalytisch aktiven Zentren sind. Dies unterscheidet die erfindungsgemäß anzuwendenden Katalysatoren unter anderem von den halogenhaltigen Katalysatoren gemäß US-A 4 288 649 oder US-A 5 326 920, in denen Halogene zielgerichtet in die katalytisch aktiven Zentren des Katalysators eingebaut werden. Der Gehalt an technisch unvermeidbaren Halogenverunreinigungen in den erfindungsgemäß anzuwendenden Katalysatoren beträgt im allgemeinen weniger als 1000 Gew.-ppm, vorzugsweise weniger als 100 Gew.-ppm Halogen, jeweils bezogen auf das Gesamtgewicht des calcinierten Katalysators, besonders bevorzugt werden halogenfreie Katalysatoren eingesetzt.

Die Herstellung der erfindungsgemäß anzuwendenden Katalysatoren erfolgt im allgemeinen durch die Behandlung von Zirkoniumhydroxid ($Zr(OH)_4$), das in der Fachliteratur sehr oft auch als Zirkoniumdioxid-Hydrat ($ZrO_2 \cdot 2H_2O$) formuliert wird, mit einer Lösung, vorzugsweise einer wäßrigen Lösung, des oder der betreffenden promotoraktiven Elemente, anschließende Trocknung des so behandelten Zirkoniumhydroxids bei Temperaturen von im allgemeinen 80 bis 150°C, vorzugsweise von 100 bis 120°C, bei Atmosphärendruck oder vermindertem Druck und Calcinierung des getrockneten, Promotorelement-enthaltenden, amorphen Zirkoniumhydroxids bei Temperaturen von im allgemeinen 300 bis 1000°C, vorzugsweise von 350 bis 900°C, besonders bevorzugt von 400 bis 800°C vorzugsweise in einer sauerstoffhaltigen Atmosphäre, beispielsweise in Gegenwart von Luft.

Das zur Herstellung der erfindungsgemäß anzuwendenden Katalysatoren eingesetzte Zirkoniumhydroxid ist im Handel erhältlich oder kann auf an sich herkömmliche Weise aus wäßrigen Lösungen von Zirkoniumsalzen, wie Zirconylnitrat ($ZrO(NO_2)_2$), Zirconylsulfat ($ZrO(SO_4)$), Zirkoniumsulfat ($Zr(SO_4)_2$) oder Zirconylcarboxylaten, z.B. Zirconylacetat oder Zirconyloxalat, oder Lösungen von Zirkoniumkomplexverbindungen durch Zugabe einer Base, wie Ammoniak, Alkalimetallcarbonat oder Alkalimetallhydroxid, ausgefällt werden. Zu diesem Zweck können auch organische Basen wie Harnstoff oder Urotropin (Hexamethylentetramin) verwendet werden, wobei bei Verwendung von Harnstoff oder Urotropin die Fällung vorteilhaft in der Siedehitze vorgenommen wird. Alternativ kann das Zirkoniumhydroxid aus hydrolysierbaren Zirkoniumverbindungen, wie Zirkoniumalkoholaten, beispielsweise Zirkoniummethanolat ($Zr(OCH_3)_4$) oder Zirkoniumisopropanolat ($Zr(OCH(CH_3))_4$) durch Hydrolyse erzeugt werden. Das Zirkoniumhydroxid fällt bei diesen Verfahren in der Regel als amorpher, gelartiger Niederschlag an.

Das oder die als Promotor wirksame(n) Element(e) können auf das Zirkoniumhydroxid-Gel nach dessen Fällung durch eine imprägnierende Behandlung aufgebracht werden oder gemeinsam mit dem Zirkoniumhydroxid in einer Mischfällung mitgefällt werden.

Bei der Mischfällung werden die gewünschten promotoraktiven Elemente, im allgemeinen in Form von deren wasserlöslichen Salzen oder Komplexen, vorzugsweise, falls das Promotorelement ein Metall ist, in Form von deren Nitraten oder Acetaten, der zu fällenden Zirkoniumsalzlösung zugefügt und diese Elemente, wie beschrieben, gemeinsam mit dem Zirkoniumhydroxid, als Hydroxide, Carbonate oder basische Salze ausgefällt. Falls das Promotorelement ein Nichtmetall ist, können beispielsweise wasserlösliche Zirkoniumsalze, welche das betreffende Promotorelement enthalten, z.B. Zirconylsulfat, zur Fällung eingesetzt werden, oder es kann eine wasserlösliche Salzverbindung des betreffenden Promotorelements oder eine dieses enthaltende Säure bei der Fällung zusätzlich zur Base zugesetzt werden, wodurch bei der Fällung schwerlösliche Zirkoniumsalze mit Anionen, die das betreffende Promotorelement enthalten, z.B. Zirkoniumphosphat, Zirkoniumborat oder Zirkoniumsilikat, mit ausgefällt werden. Auch Komplexverbindungen von Metallen, die als Promotoren wirksam sind, beispielsweise Ammoniumrhenat oder andere lösliche Salze, beispielsweise Alkalimetallsalze, derartiger Komplexverbindungen, können auf die geschilderte Weise bei der Fällung des Zirkoniums zugesetzt werden.

Die imprägnierende Behandlung des Zirkoniumhydroxid-Gels zur Aufbringung der promotoraktiven Elemente wird zweckmäßigerweise so vorgenommen, daß man eine Aufschlämmung des Zirkoniumhydroxid-Gels mit einer wäßrigen Salz-, Komplex- oder Säurelösung des oder der aufzubringenden Promotorelemente verrührt, anschließend das Wasser abdestilliert und trocknet. Anstelle wäßriger Salz- oder Säurelösungen der Promotorelemente können zur Imprägnierung auch Lösungen thermisch zersetzbarer, schwerflüchtiger organischer Verbindungen der Promotorelemente, beispielsweise metallorganische Verbindungen, in vorzugsweise polaren, organischen Lösungsmitteln, wie Alkoholen, Tetrahydrofuran, N,N-Dimethylformamid, N-Methylpyrrolidon oder Dimethylsulfoxid, eingesetzt werden.

Die Imprägnierung mit einem oder mehreren der Promotorelemente kann ein- oder mehrstufig erfolgen. Es kann z.B. eine Lösung, die mehrere promotoraktive Elemente enthält, zur Imprägnierung verwendet werden oder die imprägnierende Behandlung des Zirkoniumhydroxid-Gels kann sukzessive, in mehreren Trankschritten durch Tränkung mit Lösungen, die jeweils nur eines der Promotorelemente enthalten, durchgeführt werden. Vorteilhaft können zur Imprägnierung auch Lösungen von Verbindungen benutzt werden, die aus mehreren Promotorelementen zusammengesetzt sind, beispielsweise Heteropolysäuren oder deren wasserlöslichen Salze.

Nach Aufbringung der promotoraktiven Elemente wird das Zirkoniumhydroxid-Gel wie beschrieben getrocknet und bei den zuvor angegebenen Temperaturen calciniert. Die Calcinierungszeit beträgt im allgemeinen 1 bis 20 Stunden, vorzugsweise um die 3 Stunden. Bei der Calcinierung unter den angegebenen Bedingungen werden die auf das $ZrO_2$-Trägermaterial aufgebrachten Verbindungen der Promotorelemente in katalytisch aktive, sauerstoffhaltige Verbindungen umgewandelt. Die Calcinierung kann in Gegenwart von sauerstoffhaltigen Gasen, z.B. Luft, oder auch unter einer Inertgasatmosphäre, z.B. unter Stickstoff, vorgenommen werden, vorzugsweise wird die Calcinierung in Gegenwart von Luft durchgeführt. Es sei an dieser Stelle darauf hingewiesen, daß die Calcinierungsbedingungen für jeden einzelnen Katalysator in Abhängigkeit von seiner Zusammensetzung, von der Art und Weise wie die Promotorelemente auf das Zirkoniumhydroxid-Gel aufgebracht werden und von der Art der hierzu verwendeten Verbindungen der promotoraktiven Elemente eingestellt werden muß, wenn damit optimale Ergebnisse im erfindungsgemäßen Verfahren erzielt werden sollen. Die individuelle Einstellung dieser Calcinierungsbedingungen im Rahmen der angegebenen Calcinierungstemperaturen und Calcinierungszeit ist aber für den Fachmann auf einfache Weise in wenigen Routineversuchen zu bewerkstelligen.

Manche der erfindungsgemäß anzuwendenden Katalysatoren sind bekannt, beispielsweise die in J. Chem. Soc. Chem. Commun. 1645 (1992), US-A 4 918 041 und US-A 4 956 519 beschriebenen Eisen, Mangan und Schwefel als Promotorelemente enthaltenden Zirkoniumdioxidkatalysatoren, die bislang nur in Verfahren zur n-Butan-Isomerisierung eingesetzt worden sind.

Die erfindungsgemäß anzuwendenden Katalysatoren werden zweckmaßigerweise vor ihrem Einsatz im erfindungsgemäßen Verfahren konditioniert, d.h. sie werden auf an sich herkömmliche Weise zu Formkörpern, wie Tabletten, Kugeln, Zylindern, Ringen oder Spiralen, verformt oder zu Splitt zerkleinert und in dieser Form vorzugsweise in einer Festbettanordnung im Reaktor eingesetzt, oder sie werden zu Pulver vermahlen und in dieser Form, vorteilhaft als Suspensionskatalysatoren, verwendet.

Die erfindungsgemäß anzuwendenden Katalysatoren können praktisch unbeschränkt, vorzugsweise unter Ausschluß von Feuchtigkeit, gelagert werden. Feucht gewordene Katalysatoren werden vorteilhaft vor ihrer Verwendung im erfindungsgemäßen Verfahren bei Atmosphärendruck oder unter vermindertem Druck getrocknet - bei Atmosphärendruck im allgemeinen bei Temperaturen oberhalb 150°C, vorzugsweise bei 180 bis 300°C, bei vermindertem Druck kann die Trocknung selbstverständlich auch bei tieferen Temperaturen erfolgen.

Als Ausgangsmaterial können im erfindungsgemäßen Verfahren sowohl Reinisobuten als auch Isobutenhaltige Kohlenwasserstoffgemische, wie $C_4$-Raffinat oder Isobutan-/Isobuten-Gemische aus der Isobutandehydrierung, verwendet werden. Als $C_4$-Raffinat werden Kohlenwasserstoffgemische bezeichnet, die durch weitgehende, d. h. bis auf Spuren, Entfernung des 1,3-Butadiens, beispielsweise durch Extraktivdestillation, aus dem $C_4$-Schnitt von

Steamcrackern oder FCC-Crackern (FCC: Fluid Catalyzed Cracking) erhalten worden sind (vgl. Weissermel, Arpe: Industrielle Organische Chemie, S. 69, 102-103, 2. Auflage, Verlag Chemie 1978).

Das erfindungsgemäße Verfahren kann diskontinuierlich oder kontinuierlich bei Temperaturen von im allgemeinen -30°C bis +40°C, vorzugsweise von -20 bis +30°C und besonders bevorzugt von -10°C bis +20°C, unter Atmosphärendruck oder erhöhtem Druck, insbesondere unter dem Eigendruck des Reaktionssystems, durchgeführt werden, so daß das Isobuten flüssig bleibt. Dabei können an sich herkömmliche Reaktoren, wie Rührreaktoren oder Schlaufenreaktoren bei der diskontinuierlichen, oder Schlaufenreaktoren oder Reaktorkaskaden bei der kontinuierlichen Betriebsweise des Verfahrens eingesetzt werden. Desgleichen können in Sumpf- oder Rieselfahrweise betriebene Rohrreaktoren oder Rohrreaktorkaskaden beim kontinuierlichen Betrieb des erfindungsgemäßen Verfahrens vorteilhaft verwendet werden. Die erfindungsgemaß anzuwendenden Katalysatoren können dabei, vorzugsweise bei Verwendung von Schlaufenreaktoren oder Rohrreaktoren, in einem Festbett angeordnet sein oder in Form von Pulver im Reaktionsmedium suspendiert werden. Die Isobutenpolymerisation kann in An- oder Abwesenheit eines vorzugsweise unpolaren, halogenfreien Lösungsmittels, vorzugsweise Kohlenwasserstoffen, vorgenommen werden, bei Verwendung von Isobuten-haltigen Kohlenwasserstoffgemischen als Ausgangsmaterial wirken die darin außer dem Isobuten zusätzlich enthaltenen Kohlenwasserstoffe als Lösungs- oder Verdünnungsmittel. Da die Isobutenpolymerisation exotherm ist, kann es vorteilhaft sein, die verwendeten Reaktoren mit Vorrichtungen zur Innen- oder Außenkühlung auszustatten.

Die Einstellung des gewünschten mittleren Molekulargewichts $M_n$ des Polyisobutens kann im erfindungsgemäßen Verfahren durch die Variation der Reaktionsparameter bewirkt werden.

Im diskontinuierlichen Verfahren erfolgt diese Einstellung des mittleren Molekulargewichts $M_n$ im allgemeinen durch die Variation der eingesetzten Katalysatormenge, der Reaktionszeit und der Reaktionstemperatur. Die Reaktionszeit beträgt in Abhängigkeit von der eingesetzten Katalysatormenge im allgemeinen 0,01 bis 10 Stunden, vorzugsweise 0,1 bis 8 Stunden. Der Katalysator wird bei der diskontinuierlichen Ausgestaltung des erfindungsgemäßen Verfahrens im allgemeinen in einer Menge von 0,1 bis 50 Gew.-%, vorzugsweise 0,5 bis 20 Gew.-% und besonders bevorzugt von 1 bis 10 Gew.-%, jeweils bezogen auf das Gewicht des im eingesetzten Ausgangsmaterial enthaltenen Isobutens, zugesetzt. Zweckmaßigerweise werden je nach eingesetztem Katalysator und Ausgangsmaterial die optimalen Polymerisationsbedingungen für die Herstellung von Polyisobuten eines gewünschten mittleren Molekulargewichts $M_n$ in Vorversuchen ermittelt. Bei der kontinuierlichen Betriebsweise des erfindungsgemäßen Verfahrens erfolgt die Einstellung des mittleren Molekulargewichts $M_n$ entsprechend, statt der eingesetzten Katalysatormenge werden hierbei jedoch die Reaktionsparameter Katalysatorbelastung und Verweilzeit variiert.

Die Isolierung des Polyisobutens aus der Polymerisationsmischung birgt im allgemeinen keine verfahrenstechnischen Besonderheiten und kann, bei Verwendung eines suspendierten Katalysators nach dessen Abtrennung, beispielsweise durch Filtration, Zentrifugation oder Dekantieren, destillativ erfolgen, wobei zweckmäßigerweise zunächst leichtflüchtige Bestandteile der Polymerisationsmischung, wie nichtumgesetztes Isobuten, im Ausgangsmaterial enthaltene oder als Lösungsmittel zugesetzte Kohlenwasserstoffe, abdestilliert und anschließend höhersiedende Nebenprodukte, beispielsweise niedermolekulare Isobutenoligomere, vom Polyisobuten destillativ abgetrennt werden.

Das erfindungsgemäße Verfahren ermöglicht die wirtschaftliche Herstellung von reaktivem, halogenfreiem Polyisobuten eines mittleren Molekulargewichts $M_n$ von 500 bis 5000 Dalton und einem Gehalt an endständigen Doppelbindungen von mehr als 50 mol-%.

## Beispiele

### I. Herstellung der Katalysatoren

Als Ausgangsmaterial zur Herstellung der Katalysatoren A bis I wurde eine im Handel erhältliche, feuchte Zirkoniumhydroxid-Paste der Firma MEL-Chemicals, Manchester, England (Chemical Abstracts Service (CAS)-Nr.: 14475-63-9) mit einem Zirkoniumgehalt, berechnet als $ZrO_2$, von 47 Gew.-% verwendet. Die Katalysatoren A bis P wurden in Form von Pulver hergestellt und eingesetzt.

Die Gehalte der einzelnen Katalysatoren an Zr, Sc, Nb und Re wurden mittels Röntgenfluoreszenzanalyse (Lit. R. Bock: Methoden der Analytischen Chemie; Band 2: Nachweis- und Bestimmungsmethoden Teil 1, Verlag Chemie, weinheim 1980), die Gehalte der einzelnen Katalysatoren an P, S, Ca, Mg, Al, Ni, Co, Fe und Mn wurden mittels ICP (Inductively Coupled Plasma)-Atomemissionsspektroskopie (Lit: A. Montaser; D.W. Golightly: Inductively Coupled Plasmas in Analytical Atomic Spectrometry; 2nd Ed., VCH Verlagsgesellschaft, Weinheim).

Vor der Bestimmung dieser Elemente wurden die calcinierten Katalysatoren nochmals bis zur Gewichtskonstanz getrocknet und in dieser Form unmittelbar der Analyse zugeführt.

Katalysator A

442 g $Zr(OH)_4$-Paste wurden mit einer Lösung von 32,4 g $Fe(NO_3)_3 \cdot 9H_2O$, 10,5 g $MnSO_4 \cdot H_2O$ und 16,4 g $(NH_4)_2SO_4$ in 1000 ml Wasser imprägniert. Hierzu wurde die Paste 1 h lang mit dieser Imprägnierlösung gerührt und anschließend in einem Rotationsverdampfer das Wasser abgezogen. Der zurückbleibende Feststoff wurde 5 h bei 110°C getrocknet und anschließend 3 h bei 650°C calciniert. Katalysator A hatte nach der Calcinierung die folgende Zusammensetzung:

| | |
|---|---|
| Zr | 69 Gew.-% |
| Fe | 1,7 Gew.-% |
| Mn | 1,3 Gew.-% |
| S | 1,1 Gew.-% |

Alle Gew.-%-Angaben, auch die der folgenden Katalysatorherstellungsbeispiele, sind auf das Gesamtgewicht des calcinierten Katalysators bezogen.

Katalysator B

224 g $Zr(OH)_4$-Paste wurden, wie bei der Herstellung von Katalysator A beschrieben, mit einer Lösung von 16,2 g $Fe(NO_3)_3 \cdot 9H_2O$ und 8,2 g $(NH_4)_2SO_4$ in 500 ml Wasser imprägniert, getrocknet und calciniert. Der calcinierte Katalysator B hatte die Zusammensetzung:

| | |
|---|---|
| Zr | 69 Gew.-% |
| Fe | 1,8 Gew.-% |
| S | 1,8 Gew.-% |

Katalysator C

224 g $Zr(OH)_4$-Paste wurden, wie bei der Herstellung des Katalysators A beschrieben, mit einer Lösung von 5,25 g $MnSO_4 \cdot H_2O$ und 8,2 g $(NH_4)_2SO_4$ in 500 ml Wasser imprägniert, getrocknet und calciniert. Der calcinierte Katalysator C hatte die Zusammensetzung:

| | |
|---|---|
| Zr | 71 Gew.-% |
| Mn | 1,4 Gew.-% |
| S | 0,9 Gew.-% |

Katalysator D

224 g $Zr(OH)_4$-Paste wurden, wie bei der Herstellung des Katalysators A beschrieben, mit einer Lösung von 15,0 g $Al(NO_3)_3 \cdot 9H_2O$, 7,24 g $Fe(NO_3)_3 \cdot 9H_2O$ und 8,2 g $(NH_4)_2SO_4$ in 500 ml Wasser imprägniert, getrocknet und calciniert. Der calcinierte Katalysator D hatte die Zusammensetzung:

| | |
|---|---|
| Zr | 70 Gew.-% |
| Al | 0,6 Gew.-% |
| Fe | 1,6 Gew.-% |
| S | 0,7 Gew.-% |

Katalysator E

100 g $Zr(OH)_4$-Paste wurden mit einer Lösung von 7,24 g $Fe(NO_3)_3 \cdot 9H_2O$ und anschließend mit 11,8 g 85 %iger Phosphorsäure in 100 ml Wasser, wie bei der Herstellung von Katalysator A beschrieben, imprägniert und getrocknet. Es wurde 3 h bei 550°C calciniert. Der calcinierte Katalysator E hatte die Zusammensetzung:

| | |
|---|---|
| Zr | 66 Gew.-% |
| Fe | 1,0 Gew.-% |

(fortgesetzt)

| | |
|---|---|
| P | 3,1 Gew.-% |

Katalysator F

100 g $Zr(OH)_4$-Paste wurden mit einer Lösung von 4,57 g $Mn(NO_3)_2 \cdot 4H_2O$ und anschließend mit 11,8 g 85 %iger Phosphorsäure in 100 ml Wasser, wie bei der Herstellung von Katalysator A beschrieben, imprägniert und getrocknet und anschließend 3 h bei 550°C calciniert. Der calcinierte Katalysator F hatte die Zusammensetzung:

| | |
|---|---|
| Zr | 66 Gew.-% |
| Mn | 1,1 Gew.-% |
| P | 3,0 Gew.-% |

Katalysator G

90 g $Zr(OH)_4$-Paste wurden mit einer Lösung von 16,24 g 85 %iger Phosphorsäure in 250 ml Wasser, wie bei der Herstellung von Katalysator A beschrieben, imprägniert. Der erhaltene Feststoff wurde 5 h bei 120°C getrocknet, anschließend 3 h bei 550°C calciniert. Katalysator G hatte die Zusammensetzung:

| | |
|---|---|
| Zr | 62 Gew.-% |
| P | 5,0 Gew.-% |

Katalysator H

Zu einer Lösung von 32,2 g Zirconylnitrat und 0,71 g $Ca(NO_3)_2 \cdot 4H_2O$ in 200 ml wasser wurden langsam ca. 50 ml einer 25 %igen Ammoniaklösung gegeben, bis sich ein pH-Wert von 9 eingestellt hatte. Die Suspension des erhaltenen Niederschlags wurde noch 2 h in der überstehenden Flüssigkeit gerührt, dann abfiltriert, bei 110°C über Nacht getrocknet und 3 h bei 600°C unter einer Stickstoffatmosphäre calciniert. Der calcinierte Katalysator H hatte die Zusammensetzung:

| | |
|---|---|
| Zr | 73 Gew.-% |
| Ca | 0,1 Gew.-% |

Katalysator I

111 g $Zr(OH)_4$-Paste wurden, wie bei der Herstellung von Katalysator A beschrieben, mit einer Lösung von 12,8 g $Mg(NO_3)_2 \cdot 6H_2O$ in 250 ml Wasser imprägniert und getrocknet. Der erhaltene Feststoff wurde 3 h bei 800°C calciniert. Katalysator I hatte die Zusammensetzung:

| | |
|---|---|
| Zr | 72 Gew.-% |
| Mg | 1,3 Gew.-% |

Katalysator K

25 g $ZrO_2$-Paste wurden in einer Lösung von 38 g Niobammoniumoxalat (Hersteller: Fa. H.C. Starck, Goslar) in 400 g 5 %iger, wäßriger Oxalsäurelösung suspendiert, 2 h bei 60°C gerührt und anschließend das Wasser am Rotationsverdampfer abgezogen. Der erhaltene Feststoff wurde über Nacht bei 110°C getrocknet und anschließend, erst 2 h bei 350°C, dann weitere 2 h bei 700°C calciniert. Der calcinierte Katalysator K hatte die Zusammensetzung:

| | |
|---|---|
| Zr | 51 Gew.-% |
| Nb | 24 Gew.-% |

Katalysator L

250 g $Zr(OH)_4$-Paste wurden in einer Lösung von 54,4 g Ammoniumperrhenat ($NH_4ReO_4$) in 1000 g 5 %iger, wäßriger Oxalsäurelösung suspendiert und 2 h bei 60°C gerührt. Anschließend wurde das Wasser am Rotationsverdampfer abgezogen und der erhaltene Feststoff über Nacht bei 110°C getrocknet. Anschließend wurde zunächst für 2 h bei 350°C und dann 2 h bei 700°C calciniert. Es wurden 100 g Katalysator L folgender Zusammensetzung erhalten:

| | |
|---|---|
| Zr | 59 Gew.-% |
| Re | 13 Gew.-% |

Katalysator M

93,5 g Zirconylchlorid ($ZrOCl_2 \cdot 8H_2O$) und 2,0 g Scandiumnitrat ($Sc(NO_3)_3 \cdot 6H_2O$) wurden in 1000 ml Wasser gelöst und mit 57 ml 25 %iger wäßriger Ammoniaklösung gefällt. Der pH-Wert nach der Fällung betrug 9,0. Der Niederschlag wurde zur Alterung 2 h in der Fällungslösung gerührt, abfiltriert und Chlorid-frei gewaschen. Der Niederschlag wurde über Nacht bei 110°C getrocknet und 3 h bei 600°C calciniert. Der so hergestellte Katalysator enthielt 69 Gew.-% Zr und 3,3 Gew.-% Sc. Sein Chlorgehalt betrug weniger als 0,1 Gew.-%.

Katalysator N

99,5 g $Zr(OH)_4$-Paste (≙ 80,0 g $ZrO_2$) wurden mit einer Lösung von 11,5 g Nickelnitrat ($Ni(NO_3)_2 \cdot 6H_2O$) in 100 ml Wasser imprägniert und anschließend im Rotationsverdampfer zur Trockene eingeengt. Nach Trocknung bei 110°C wurde der Katalysator 16 h bei 500°C calciniert. Der so hergestellte Katalysator enthielt 71 Gew.-% Zr und 2,9 Gew.-% Ni.

Katalysator O

99,5 g $Zr(OH)_4$-Paste (≙ 80,0 g $ZrO_2$) wurden mit einer Lösung von 11,5 g Kobaltnitrat ($Co(NO_3)_2 \cdot 6H_2O$) in 100 ml Wasser imprägniert und anschließend im Rotationsverdampfer zur Trockene eingeengt. Nach Trocknung bei 110°C wurde der Katalysator 16 h bei 500°C calciniert. Der so hergestellte Katalysator enthielt 71 Gew.-% Zr und 2,8 Gew.-% Co.

Katalysator P

99,5 g $Zr(OH)_4$-Paste (≙ 80,0 g $ZrO_2$) wurden mit eine Lösung von 10,1 g Mangannitrat ($Mn(NO_3)_2 \cdot 4H_2O$) in 100 ml Wasser imprägniert und anschließend im Rotationsverdampfer zur Trockene eingeengt. Nach 5 h Trocknung bei 110°C wurde der Katalysator 16 h bei 600°C unter $N_2$ calciniert. Der so hergestellte Katalysator enthielt 70 Gew. % Zr und 2,5 Gew.-% Mn.

II. Polymerisation von Isobuten

Das Zahlenmittel des Molekulargewichts $M_n$, hierin auch als mittleres Molekulargewicht $M_n$ bezeichnet, wurde mittels Gelpermeationschromatographie (GPC) bestimmt, wobei standardisierte Polyisobutene als Eichsubstanzen verwendet wurden. Das Zahlenmittel $M_n$ wurde aus den erhaltenen GPC-Chromatogrammen nach der Gleichung

$$M_n = \Sigma c_i / \Sigma (c_i / M_i)$$

berechnet, wobei $c_i$ für die Konzentration der einzelnen Polymerspezies im erhaltenen Polymergemisch und $M_i$ für das Molekulargewicht der einzelnen Polymerspezies i steht. Die Molekulargewichtsverteilung, auch Dispersität (D) genannt, wurde aus dem Verhältnis des Gewichtsmittels ($M_w$) und des Zahlenmittels ($M_n$) nach der Gleichung

$$D = M_w / M_n$$

bestimmt, wobei das Gewichtsmittel $M_w$ aus den erhaltenen GPC-Chromatogrammen nach folgender Gleichung ermittelt wurde:

$$M_w = \Sigma\, c_i\, M_i / \Sigma\, c_i$$

Der α- und β-olefin-Gehalt (Formel I und II) wurde $^{13}C$-NMR-spektroskopisch bestimmt.

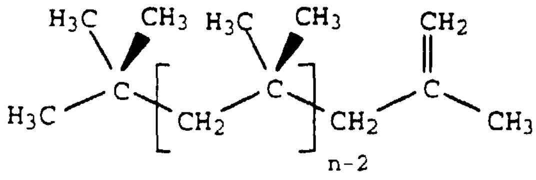

I

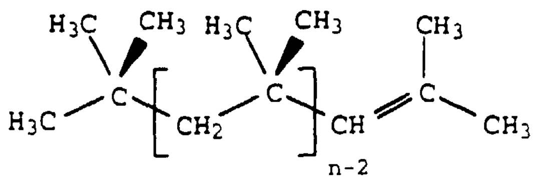

II

Die C-Atome der endständigen Doppelbindung der α-Olefine I zeigen im $^{13}C$-NMR-Spektrum Signale bei einer chemischen Verschiebung von 114,4 ppm ($CH_2$) und 143,6 ppm (C). Die Signale der C-Atome der trisubstituierten Doppelbindung der β-olefine II liegen im $^{13}C$-NMR-Spektrum bei 127,9 (= $\underline{C}H$-R) und 135,4 ppm (= $C(\underline{C}H_3)_2$). Durch Auswertung der Signalflächen und Vergleich mit den Signalflächen der übrigen olefinischen C-Atome kann der Gehalt an α- und β-olefin bestimmt werden. Als Lösungsmittel diente deuteriertes Chloroform ($CDCl_3$) und als interner Standard Tetramethylsilan.

Beispiel 1

In ein 25 ml Druckgefäß aus Glas wurden unter Argon bei -70°C 10 g Isobuten einkondensiert. Nach Zugabe von 0,1 g Katalysator A, der zuvor nochmals bei 180°C/0,3 mbar getrocknet worden war, wurde das Gefäß verschlossen und die Suspension 6 h bei 0°C unter dem Eigendruck des Reaktionssystems gerührt. Danach wurde die Polymerisationsmischung bei 0°C mit 10 g n-Hexan verdünnt. Nichtumgesetztes Isobuten wurde bei Raumtemperatur abgedampft, der Katalysator abfiltriert und das zugesetzte Lösungsmittel bei Raumtemperatur und unter langsamer Absenkung des Drucks bis auf 0,3 mbar vom Filtrat abdestilliert. Niedermolekulare Isobutenoligomere wurden vom erhaltenen Polyisobuten durch Kugelrohrdestillation bei 120°C/0,3 mbar abgetrennt. Das in einer Ausbeute von 44 % erhaltene, farblose Polyisobuten hatte ein mittleres Molekulargewicht $M_n$ von 730 Dalton, eine Molekulargewichtsverteilung D von 2,7 und einen Gehalt an endständigen Doppelbindungen (= α-Olefin-gehalt) von 74 mol-%. Der β-Olefingehalt betrug 25 mol-%.

Beispiele 2 bis 10

Die Beispiele 2 bis 10 wurden, wie in Beispiel 1 beschrieben, durchgeführt. Die mit den verschiedenen Katalysatoren und mit unterschiedlichen Katalysatormengen erhaltenen Ergebnisse dieser diskontinuierlichen Versuche sind in Tabelle 1 zusammengestellt.

Tabelle 1:

| Polymerisation von Reinisobuten | | | | | | | |
|---|---|---|---|---|---|---|---|
| Polymerisationsbedingungen: Polymerisationstemperatur: 0°C; Eigendruck; Polymerisationszeit: 6 h; Einsatzmenge: 10 g Isobuten | | | | | | | |
| Bsp. Nr. | Katalysator | Katalysatormenge | Ausbeute 1) | S (I) 2) | S (I+II) 3) | $M_n$ | D |
| | | [g] | [%] | [mol-%] | [mol-%] | | |
| 2 | B | 0,1 | 41 | 68 | 87 | 1210 | 2,6 |
| 3 | C | 0,1 | 25 | 67 | 94 | 880 | 2,6 |
| 4 | D | 0,1 | 76 | 67 | 86 | 860 | 3,4 |
| 5 | E | 1,0 | 89 | 66 | 96 | 1260 | 3,7 |

1) Eindampfrückstand nach Kugelrohrdestillation (120°C/0,3 mbar) bezogen auf eingesetztes Isobuten

2) S(I) = Gehalt an endständigen Doppelbindungen = α-Olefingehalt

3) S(I+II) = Gehalt an endständigen Doppelbindungen + Gehalt an β-olefinischen Doppelbindungen

Tabelle 1: (fortgesetzt)

| Polymerisation von Reinisobuten | | | | | | | |
|---|---|---|---|---|---|---|---|
| Bsp. Nr. | Katalysator | Katalysatormenge | Ausbeute 1) | S (I) 2) | S (I+II) 3) | $M_n$ | D |
| | | [g] | [%] | [mol-%] | [mol-%] | | |
| 6 | F | 1,0 | 20 | 74 | 98 | 1000 | 2,7 |
| 7 | G | 1,0 | 20 | 85 | 98 | 1230 | 3,1 |
| 8 | H | 1,0 | 72 | 58 | 84 | 2840 | 3,8 |
| 9 | I | 1,0 | 23 | 82 | 99 | 1680 | 2,5 |
| 10 | K | 1,0 | 7 | 60 | 99 | 2600 | 3,8 |

1) Eindampfrückstand nach Kugelrohrdestillation (120°C/0,3 mbar) bezogen auf eingesetztes Isobuten
2) S(I) = Gehalt an endständigen Doppelbindungen = α-Olefingehalt
3) S(I+II) = Gehalt an endständigen Doppelbindungen + Gehalt an β-olefinischen Doppelbindungen

Beispiele 11 bis 16

Die Beispiele 11 bis 16 wurden, wie bei Beispiel 1 beschrieben, durchgeführt, jedoch wurde anstelle von Reinisobuten ein synthetisches Gemisch aus gleichen Gewichtsteilen Isobuten und Isobutan eingesetzt. Die hierbei erhaltenen Ergebnisse sind in Tabelle 2 zusammengestellt.

Tabelle 2:

| Polymerisation eines Isobuten/Isobutan-Gemisches | | | | | | | | |
|---|---|---|---|---|---|---|---|---|
| Polymerisationsbedingungen: Eigendruck; Polymerisationszeit: 6 h; Einsatzmenge: 5 g Isobuten + 5 g Isobutan | | | | | | | | |
| Bsp. Nr. | Katalysator | Katalysatormenge | Ausbeute1) | S (I)2) | S (I+II)3) | $M_n$ | D | Temp.4) |
| | | [g] | [%] | [mol-%] | [mol-%] | | | [°C] |
| 11 | A | 0,05 | 14 | 78 | 96 | 500 | 2,1 | 0 |
| 12 | L | 0,14 | 26 | 68 | 81 | 660 | 3,4 | 0 |
| 13 | C | 0,50 | 75 | 58 | 88 | 960 | 2,8 | -10 |
| 14 | D | 0,25 | 44 | 78 | 99 | 800 | 2,9 | -10 |
| 15 | F | 0,50 | 79 | 59 | 86 | 1900 | 3,3 | -10 |
| 16 | G | 1,00 | 27 | 52 | 84 | 640 | 2,4 | -10 |

1) Eindampfrückstand nach Kugelrohrdestillation (120°C/0,3 mbar) bezogen auf eingesetztes Isobuten
2) S(I) = Gehalt an endständigen Doppelbindungen = α-Olefingehalt
3) S(I+II) = Gehalt an endständigen Doppelbindungen + Gehalt an β-olefinischen Doppelbindungen
4) Polymerisationstemperatur

Beispiel 17

Beispiel 17 wurde, wie in Beispiel 1 beschrieben, durchgeführt, jedoch wurde anstelle von Reinisobuten ein Isobuten-haltiger C4-Schnitt (Raffinat I) folgender Zusammensetzung als Einsatzstoff verwendet:
43 Gew.-% Isobuten, 26 Gew.-% 1-Buten, 13 Gew.-% 2-Butene,
13 Gew.-% n-Butan, 5 Gew.-% Isobutan

Polymerisationsbedingungen: Polymerisationstemperatur: 0°C; Eigendruck; Polymerisationszeit: 6 h; Einsatzmenge: 10 g Raffinat I, Polymerisationskatalysator: Katalysator E; eingesetzte Katalysatormenge: 2 g

Die Ausbeute an Polyisobuten eines mittleren Molekulargewichts $M_n$ von 1260 Dalton betrug nach Kugelrohrdestillation bei 120°C/0,3 mbar 8 %. Der Gehalt an endständigen Doppelbindungen betrug bei 64 mol-% (α-Olefin) und der Gehalt an β-olefin 15 mol-%. Für die Molekulargewichtsverteilung D wurde der Wert 3,7 ermittelt.

Beispiele 18 bis 21

Die Katalysatoren M, N, O und P wurden in diskontinuierlichen Polymerisationsversuchen getestet. Die Versuchsdurchführung erfolgte wie in Beispiel 1 beschrieben. Die Versuchsergebnisse sind in Tabelle 3 aufgelistet.

Tabelle 3:

| Isobuten-Polymerisation mit Reinisobuten | | | | | | | |
|---|---|---|---|---|---|---|---|
| Polymerisationstemperatur: 0°C; Eigendruck; 6 h Reaktionszeit; 10 g Reinisobuten | | | | | | | |
| Bsp. Nr. | Katalysator | Katalysatormenge | Ausbeute 1) | S (I) 2) | S (I+II) 3) | $M_n$ | D |
| | | [g] | [%] | [mol-%] | [mol-%] | | |
| 18 | M 6) | 1 | 26 | 58 | 98 | 1130 | 2,8 |
| 19 | N | 2 | 3 4) | 62 | 97 | 1250 | 3,5 |
| 20 | O | 2 | 6 5) | 57 | 95 | 580 | 2,6 |
| 21 | P | 2 | 39 | 50 | 91 | 870 | 3,7 |

1) Eindampfrückstand nach Kugelrohrdestillation (120°C/0,3 mbar) bezogen auf eingesetztes Isobuten
2) S(I) = $\alpha$-Olefingehalt
3) S(I+II) = Gehalt an $\alpha$+$\beta$-olefin
4) Reaktionszeit: 0,5 h
5) Reaktionszeit: 1 h
6) In dem mit Katalysator M hergestellten Polyisobuten konnte elementaranalytisch kein Chlor nachgewiesen werden

Vergleichsbeispiele

Mit zwei unterschiedlich vorbehandelten, reinen Zirkoniumdioxid-Proben wurde der Polymerisationsversuch von Beispiel 1 nachgearbeitet. Die eine Zirkoniumdioxid-Probe (Herkunft: Firma MEL-Chemicals) war 3 h bei 400°C calciniert und vor ihrem Einsatz nochmals bei 180°C/0,3 mbar getrocknet worden, die andere Zirkoniumdioxid-Probe war 3 h bei 600°C calciniert und vor ihrem Einsatz nochmals wie die erste Zirkoniumdioxid-Probe getrocknet worden. Nach Aufarbeitung der Reaktionsmischung, wie in Beispiel 1 beschrieben, wurde nach Eindampfung des Filtrats in beiden Fällen kein polymerer Rückstand gefunden.

Polymerisation mit einem Molybdän-haltigen Katalysator (Vergleich)

Es wurde der Katalysator gemäß Beispiel 1 von JP-A 139 429/1981 hergestellt, bei 500°C calciniert und in Form von Pulver in die Isobuten-Polymerisation eingesetzt. Die diskontinuierliche Polymerisation von 10 g Isobuten in Gegenwart von 1 g dieses Katalysators, der unmittelbar vor seinem Einsatz bei 180°C und einem Druck von 0,3 mbar nochmals getrocknet worden war, wurde wie in Beispiel 1 unter Eiskühlung durchgeführt. Die Polymerisationszeit betrug 6 h. Nach Aufarbeitung der Reaktionsmischung und Kugelrohrdestillation (wie in Beispiel 1 beschrieben) wurden 5,3 g eines polymeren Destillationsrückstands erhalten, der einen Gehalt an endständigen Doppelbindungen von nur 11 mol-% und einen $\beta$-Olefingehalt von 20 mol-% hatte. Das mittlere Molekulargewicht $M_n$ betrug 970 Dalton, die Dispersizität D 3,5.

**Patentansprüche**

1. Verfahren zur Herstellung von halogenfreiem, reaktivem Polyisobuten mit einem Gehalt an endständigen Doppelbindungen von mehr als 50 mol-% und einem mittleren Molekulargewicht $M_n$ von 500 bis 5000 Dalton durch die kationische Polymerisation von Isobuten oder Isobuten-haltigen Kohlenwasserstoffgemischen in flüssiger Phase, dadurch gekennzeichnet, daß man die Polymerisation bei einer Temperatur von -30°C bis +40°C an einem heterogenen, calcinierten Polymerisationskatalysator durchführt, der mindestens ein als Promotor wirksames Element, ausgewählt aus der I., II., III., IV., V., VII. oder VIII. Nebengruppe des Periodensystems der Elemente oder aus der II., III., IV., V. oder VI. Hauptgruppe des Periodensystems der Elemente oder mehrere dieser Elemente jeweils in Form einer sauerstoffhaltigen Verbindung und Zirkonium in Form einer sauerstoffhaltigen Verbindung enthält und wobei der Polymerisationskatalysator keine technisch wirksamen Mengen an Halogen enthält.

2. Verfahren nach Anspruch 1, dadurch gekennzeichnet, daß man einen Polymerisationskatalysator verwendet, der

eine sauerstoffhaltige Schwefelverbindung enthält.

3. Verfahren nach den Ansprüchen 1 und 2, dadurch gekennzeichnet, daß man einen Polymerisationskatalysator verwendet, der eine sauerstoffhaltige Phosphorverbindung enthält.

4. Verfahren nach den Ansprüchen 1 bis 3, dadurch gekennzeichnet, daß man einen Polymerisationskatalysator verwendet, der eine sauerstoffhaltige Silicium-, Germanium- und/oder Zinnverbindung enthält.

5. Verfahren nach den Ansprüchen 1 bis 4, dadurch gekennzeichnet, daß man einen Polymerisationskatalysator verwendet, der eine sauerstoffhaltige Bor-, Aluminium-, Gallium- und/oder Indiumverbindung enthält.

6. Verfahren nach den Ansprüchen 1 bis 5, dadurch gekennzeichnet, daß man einen Polymerisationskatalysator verwendet, der eine sauerstoffhaltige Verbindung des Zinks enthält.

7. Verfahren nach den Ansprüchen 1 bis 6, dadurch gekennzeichnet, daß man einen Polymerisationskatalysator verwendet, der eine sauerstoffhaltige Verbindung des Kupfers enthält.

8. Verfahren nach den Ansprüchen 1 bis 7, dadurch gekennzeichnet, daß man einen Polymerisationskatalysator verwendet, der eine sauerstoffhaltige Verbindung des Magnesiums, Calciums, Strontiums und/oder Bariums enthält.

9. Verfahren nach den Ansprüchen 1 bis 8, dadurch gekennzeichnet, daß man einen Polymerisationskatalysator verwendet, der eine sauerstoffhaltige Verbindung des Scandiums, Yttriums, Lanthans und/oder Cers enthält.

10. Verfahren nach den Ansprüchen 1 bis 9, dadurch gekennzeichnet, daß man einen Polymerisationskatalysator verwendet, der eine sauerstoffhaltige Verbindung des Titans und/oder Hafniums enthält.

11. Verfahren nach den Ansprüchen 1 bis 10, dadurch gekennzeichnet, daß man einen Polymerisationskatalysator verwendet, der eine sauerstoffhaltige Verbindung des Vanadiums, Niobs und/oder Tantals enthält.

12. Verfahren nach den Ansprüchen 1 bis 11, dadurch gekennzeichnet, daß man einen Polymerisationskatalysator verwendet, der eine sauerstoffhaltige Verbindung des Mangans und/oder Rheniums enthält.

13. Verfahren nach den Ansprüchen 1 bis 12, dadurch gekennzeichnet, daß man einen Polymerisationskatalysator verwendet, der eine sauerstoffhaltige Verbindung des Eisens, Kobalts und/oder Nickels enthält.

14. Verfahren nach Anspruch 1, dadurch gekennzeichnet, daß man einen Polymerisationskatalysator verwendet, der außer einer sauerstoffhaltigen Verbindung des Phosphors und/oder Schwefels zusätzlich eine oder mehrere sauerstoffhaltige Verbindungen von als Promotor wirksamen Elementen aus der I., II., III., IV., V., VII. oder VIII. Nebengruppe des Periodensystems der Elemente oder aus der III. oder IV. Hauptgruppe des Periodensystems der Elemente oder Gemische von sauerstoffhaltigen Verbindungen dieser Elemente enthält.

15. Verfahren nach Anspruch 1, dadurch gekennzeichnet, daß man einen Polymerisationskatalysator verwendet, der außer einer sauerstoffhaltigen Verbindung des Phosphors und/oder Schwefels zusätzlich eine oder mehrere sauerstoffhaltige Verbindungen von als Promotor wirksamen Elementen aus der VII. oder VIII. Nebengruppe des Periodensystems der Elemente oder aus der III. Hauptgruppe des Periodensystems der Elemente oder Gemische von sauerstoffhaltigen Verbindungen dieser Elemente enthält.

16. Verfahren nach Anspruch 1, dadurch gekennzeichnet, daß man einen Polymerisationskatalysator verwendet, der außer einer sauerstoffhaltigen Verbindung des Phosphors und/oder Schwefels zusätzlich eine sauerstoffhaltige Verbindung des Eisens, Mangans oder Aluminiums oder Gemische von sauerstoffhaltigen Verbindungen dieser Elemente enthält.

17. Verfahren nach Anspruch 1, dadurch gekennzeichnet, daß man Polymerisationskatalysatoren verwendet, die durch Imprägnierung von Zirkoniumhydroxid oder Zirkoniumdioxid mit Verbindungen von einem oder mehreren der als Promotor wirksamen Elemente, Trocknung und Calcinierung bei Temperaturen von 300 bis 1000°C hergestellt worden sind.

**18.** Verfahren nach Anspruch 1, dadurch gekennzeichnet, daß man Polymerisationskatalysatoren verwendet, die durch Imprägnierung von Zirkoniumhydroxid oder Zirkoniumdioxid mit Verbindungen von einem oder mehreren der als Promotor wirksamen Elemente, Trocknung und Calcinierung bei Temperaturen von 400 bis 800°C hergestellt worden sind.

**19.** Verfahren nach Anspruch 1, dadurch gekennzeichnet, daß man Polymerisationskatalysatoren verwendet, die durch gemeinsame Fällung von Zirkoniumhydroxid mit einem oder mehreren der als Promotor wirksamen Elemente, Trocknung des erhaltenen Niederschlags und Calcinierung bei Temperaturen von 300 bis 1000°C hergestellt worden sind.

**20.** Verfahren nach Anspruch 1, dadurch gekennzeichnet, daß man den calcinierten Polymerisationskatalysator vor seiner Verwendung bei Temperaturen von 150 bis 300°C trocknet.

## Claims

**1.** A process for preparing halogen-free, reactive polyisobutene having a terminal double bond content of more than 50 mol% and an average molecular weight $M_n$ of from 500 to 5000 dalton by liquid phase cationic polymerization of isobutene or hydrocarbon mixtures comprising isobutene, which comprises polymerizing at from -30°C to +40°C over a heterogeneous, calcined polymerization catalyst comprising at least one promoter element selected from transition group I, II, III, IV, IV, VII or VIII of the Periodic Table of the Elements or from main group II, III, IV, V or VI of the Periodic Table of the Elements or more than one of said elements, in each case in the form of an oxygen-containing compound, and zirconium in the form of an oxygen-containing compound, and no technically effective amounts of halogen.

**2.** A process as claimed in claim 1, wherein the polymerization catalyst used comprises an oxygen-containing sulfur compound.

**3.** A process as claimed in claim 1 or 2, wherein the polymerization catalyst used comprises an oxygen-containing phosphorus compound.

**4.** A process as claimed in any of claims 1 to 3, wherein the polymerization catalyst used comprises an oxygen-containing silicon, germanium and/or tin compound.

**5.** A process as claimed in any of claims 1 to 4, wherein the polymerization catalyst used comprises an oxygen-containing boron, aluminum, gallium and/or indium compound.

**6.** A process as claimed in any of claims 1 to 5, wherein the polymerization catalyst used comprises an oxygen-containing zinc compound.

**7.** A process as claimed in any of claims 1 to 6, wherein the polymerization catalyst used comprises an oxygen-containing copper compound.

**8.** A process as claimed in any of claims 1 to 7, wherein the polymerization catalyst used comprises an oxygen-containing magnesium, calcium, strontium and/or barium compound.

**9.** A process as claimed in any of claims 1 to 8, wherein the polymerization catalyst used comprises an oxygen-containing scandium, yttrium, lanthanum and/or cerium compound.

**10.** A process as claimed in any of claims 1 to 9, wherein the polymerization catalyst used comprises an oxygen-containing titanium and/or hafnium compound.

**11.** A process as claimed in any of claims 1 to 10, wherein the polymerization catalyst used comprises an oxygen-containing vanadium, niobium and/or tantalum compound.

**12.** A process as claimed in any of claims 1 to 11, wherein the polymerization catalyst used comprises an oxygen-containing manganese and/or rhenium compound.

13. A process as claimed in any of claims 1 to 12, wherein the polymerization catalyst used comprises an oxygen-containing iron, cobalt and/or nickel compound.

14. A process as claimed in claim 1, wherein the polymerization catalyst used, in addition to an oxygen-containing phosphorus and/or sulfur compound, comprises one or more oxygen-containing compounds of promoter elements from transition group I, II, III, IV, V, VII or VIII of the Periodic Table of the Elements or from main group III or IV of the Periodic Table of the Elements or mixtures of oxygen-containing compounds of said elements.

15. A process as claimed in claim 1, wherein the polymerization catalyst used, in addition to an oxygen-containing phosphorus and/or sulfur compound, comprises one or more oxygen-containing compounds of promoter elements from transition group VII or VIII of the Periodic Table of the Elements or from main group III of the Periodic Table of the Elements or mixtures of oxygen-containing compounds of said elements.

16. A process as claimed in claim 1, wherein the polymerization catalyst used, in addition to an oxygen-containing phosphorus and/or sulfur compound, comprises an oxygen-containing iron, manganese or aluminum compound or mixtures of oxygen-containing compounds of said elements.

17. A process as claimed in claim 1, wherein the polymerization catalysts used have been prepared by impregnating zirconium hydroxide or zirconium oxide with compounds of one or more of the promoter elements, drying and calcining at from 300 to 1000°C.

18. A process as claimed in claim 1, wherein the polymerization catalysts used have been prepared by impregnating zirconium hydroxide or zirconium oxide with compounds of one or more of the promoter elements, drying and calcining at from 400 to 800°C.

19. A process as claimed in claim 1, wherein the polymerization catalysts used have been prepared by coprecipitating zirconium hydroxide and one or more of the promoter elements, drying the resulting precipitate and calcining at from 300 to 1000°C.

20. A process as claimed in claim 1, wherein the calcined polymerization catalyst is dried at from 150 to 300°C prior to use.

**Revendications**

1. Procédé de préparation de polyisobuténes réactifs, dépourvus d'halogènes, ayant une teneur en doubles liaisons terminales de plus de 50% en mole, et une masse moléculaire moyenne $M_n$ de 500 à 5000 Dalton, par polymérisation cationique en phase liquide d'isobutène ou de mélanges d'hydrocarbures contenant de l'isobutène, caractérisé en ce que l'on mène la polymérisation à une température de -30 à +40°C sur un catalyseur de polymérisation hétérogène et calciné, contenant au moins un élément agissant en tant que promoteur choisi dans les groupes IB, IIB, IIIB, IVB, VB, VIIB ou VIII de la classification périodique des éléments ou dans les groupes IIA, IIIA, IVA, VA ou VIA de la classification périodique des éléments ou plusieurs de ces éléments, à chaque fois sous la forme d'un composé oxygéné et du zirconium sous forme d'un composé oxygéné, et où le catalyseur de polymérisation ne contient pas une quantité d'halogènes active techniquement.

2. Procédé selon la revendication 1, caractérisé en ce que l'on utilise un catalyseur de polymérisation contenant un composé oxygéné du soufre.

3. Procédé selon les revendications 1 et 2, caractérisé en ce que l'on utilise un catalyseur de polymérisation contenant un composé oxygéné du phosphore.

4. Procédé selon l'une quelconque des revendications 1 à 3, caractérisé en ce que l'on utilise un catalyseur de polymérisation contenant un composé oxygéné du silicium, du germanium et/ou de l'étain.

5. Procédé selon l'une quelconque des revendications 1 à 4, caractérisé en ce que l'on utilise un catalyseur de polymérisation contenant un composé oxygéné du bore, de l'aluminium, du gallium et/ou de l'indium.

6. Procédé selon l'une quelconque des revendications 1 à 5, caractérisé en ce que l'on utilise un catalyseur de

polymérisation contenant un composé oxygéné du zinc.

**7.** Procédé selon l'une quelconque des revendications 1 à 6, caractérisé en ce que l'on utilise un catalyseur de polymérisation contenant un composé oxygéné du cuivre.

**8.** Procédé selon l'une quelconque des revendications 1 à 7, caractérisé en ce que l'on utilise un catalyseur de polymérisation contenant un composé oxygéné du magnésium, du calcium, du strontium et/ou du baryum.

**9.** Procédé selon l'une quelconque des revendications 1 à 8, caractérisé en ce que l'on utilise un catalyseur de polymérisation contenant un composé oxygéné du scandium, de l'yttrium, du lanthane et/ou du cérium.

**10.** Procédé selon l'une quelconque des revendications 1 à 9, caractérisé en ce que l'on utilise un catalyseur de polymérisation contenant un composé oxygéné du titane et/ou de l'hafnium.

**11.** Procédé selon l'une quelconque des revendications 1 à 10, caractérisé en ce que l'on utilise un catalyseur de polymérisation contenant un composé oxygéné du vanadium, du niobium et/ou du tantale.

**12.** Procédé selon l'une quelconque des revendications 1 à 11, caractérisé en ce que l'on utilise un catalyseur de polymérisation contenant un composé oxygéné du manganèse et/ou du rhénium.

**13.** Procédé selon l'une quelconque des revendications 1 à 12, caractérisé en ce que l'on utilise un catalyseur de polymérisation contenant un composé oxygéné du fer, du cobalt et/ou du nickel.

**14.** Procédé selon la revendication 1, caractérisé en ce que l'on utilise un catalyseur de polymérisation contenant, en plus d'un composé oxygéné du phosphore et/ou du soufre, un ou plusieurs composés oxygénés d'éléments agissant comme promoteurs, choisis dans les groupes IB, IIB, IIIB, IVB, VB, VIIB ou VIII de la classification périodique des éléments ou dans les groupes IIIA ou IVA de la classification périodique des éléments, ou des mélanges de composés oxygénés de ces éléments.

**15.** Procédé selon la revendication 1, caractérisé en ce que l'on utilise un catalyseur de polymérisation contenant, en plus d'un composé oxygéné du phosphore et/ou du soufre, un ou plusieurs composés oxygénés d'éléments agissant comme promoteurs, choisis dans les groupes VIIB ou VIII de la classification périodique des éléments ou dans le groupe IIIA de la classification périodique des éléments, ou des mélanges de composés oxygénés de ces éléments.

**16.** Procédé selon la revendication 1, caractérisé en ce que l'on utilise un catalyseur de polymérisation contenant, en plus d'un composé oxygéné du phosphore et/ou du soufre, un composé oxygéné du fer, du manganèse ou de l'aluminium, ou des mélanges de composés oxygénés de ces éléments.

**17.** Procédé selon la revendication 1, caractérisé en ce que l'on utilise des catalyseurs de polymérisation préparés par imprégnation d'hydroxyde de zirconium ou de dioxyde de zirconium avec des composés d'un ou plusieurs éléments agissant comme promoteur, séchage et calcination à des températures de 300 à 1000°C.

**18.** Procédé selon la revendication 1, caractérisé en ce que l'on utilise des catalyseurs de polymérisation préparés par imprégnation d'hydroxyde de zirconium ou de dioxyde de zirconium avec des composés d'un ou plusieurs éléments agissant comme promoteur, séchage et calcination à des températures de 400 à 800°C.

**19.** Procédé selon la revendication 1, caractérisé en ce que l'on utilise des catalyseurs de polymérisation préparés par précipitation simultanée d'hydroxyde de zirconium avec un ou plusieurs des éléments agissant comme promoteur, séchage du précipité obtenu et calcination à des températures de 300 à 1000°C.

**20.** Procédé selon la revendication 1, caractérisé en ce que l'on sèche le catalyseur de polymérisation, avant son utilisation, à des températures de 150 à 300°C